# EUROPÄISCHE PATENTSCHRIFT

(11) **EP 0 859 019 B1**
(45) Veröffentlichungstag und Bekanntmachung des Hinweises auf die Patenterteilung: **18.08.2004**
(21) Anmeldenummer: 98101527.4
(22) Anmeldetag: 29.01.1998
(51) Int. Cl.: C08G 18/66, C08G 18/40

(54) **Verfahren zur Herstellung einer homogenen entmischungsstabilen Polyolkomponente**
Process for the preparation of a homogeneous polyol component stable to demixing
Procédé de préparation d'un composant polyol homogène stable à la séparation

(30) Priorität: 17.02.1997 DE 19705993
(43) Veröffentlichungstag der Anmeldung: 19.08.1998
(73) Patentinhaber: BASF AKTIENGESELLSCHAFT, 67056 Ludwigshafen (DE)
(72) Erfinder: Falke, Peter, Dr., 01987 Schwarzheide (DE); Hendreich, Regina, 01945 Frauendorf (DE); Schuster, Marita, 01968 Senftenberg (DE); Zaschke, Bernd, Dr., 01157 Dresden (DE)

(56) Entgegenhaltungen:
- EP-A- 0 579 080
- US-A- 4 469 821

## Beschreibung

Die Erfindung betrifft ein Verfahren zur Herstellung einer homogenen Polyurethankomponente, bestehend aus mindestens zwei höhermolekularen Verbindungen mit mindestens zwei reaktiven Wasserstoffatomen, insbesondere zwei in der Regel nicht mischbaren Polyolen, und gegebenenfalls Anteilen an Kettenverlängerern und/oder Vernetzern, Treibmitteln, Katalysatoren sowie weiteren Hilfsmitteln und/oder Zusatzstoffen.

Diese Komponenten aus nicht oder schwer mischbaren Polyolen neigen häufig dazu, sich nach kurzer Zeit zu entmischen. Das betrifft insbesondere Gemische aus sehr ethylenoxidreichen und ethylenoxidarmen bzw. ethylenoxidfreien Polyolen, sowie Gemische aus Polyetheralkoholen und Polyesteralkoholen.

Die Erfindung beschreibt ein Verfahren, wie durch Zusatz geringer Anteile von primären und/oder sekundären Aminen und/oder Alkanolaminen und nachfolgender Umsetzung der so homogenisierten Polyolkomponente mit geringen Anteilen an Isocyanaten und/oder NCO-gruppentragenden Verbindungen eine dauerhaft entmischungsstabile Abmischung erzielt werden kann.

Die Herstellung von Polyurethanen (PUR) durch Umsetzung von organischen und/oder modifizierten organischen Polyisocyanaten bzw. Prepolymeren mit höher funktionellen Verbindungen mit mindestens zwei reaktiven Wasserstoffatomen, beispielsweise Polyoxyalkylenpolyaminen und/oder vorzugsweise organischen Polyhydroxylverbindungen, insbesondere Polyetherolen mit Molekulargewichten von z.B. 300 bis 6000, und gegebenfalls Kettenverlängerungs- und/oder Vernetzungsmitteln mit Molekulargewichten bis ca. 400 in Gegenwart von Katalysatoren, Treibmitteln, Hilfsmitteln und/oder Zusatzstoffen ist bekannt und wurde vielfach beschrieben. Eine zusammenfassende Übersicht über die Herstellung von Polyurethanen wird z.B. im Kunststoff-Handbuch, Band VII, "Polyurethane", 1. Auflage 1966, herausgegeben von Dr. R. Vieweg und Dr. A. Höchtlen sowie 2. Auflage, 1983, und 3. Auflage, 1993, jeweils herausgegeben von Dr. G. Oertel (Carl Hanser Verlag, München) gegeben.

Für zahlreiche Anwendungsgebiete ist es häufig wünschenswert, Polyolgemische aus Polyetheralkoholen und Polyesteralkoholen oder aus ethylenoxidreichen Polyetheralkoholen und ethylenoxidarmen oder -freien Polyetheralkoholen als homogene Polyurethankomponente, gegebenenfalls unter Zusatz von Kettenverlängerern und/oder Vernetzern, Treibmitteln, Katalysatoren und weiteren Hilfsmitteln und/oder Zusatzstoffen entmischungsstabil herzustellen. Von Nachteil ist allerdings die Tatsache, daß diese Polyolmischungen nicht homogen bleiben, sondern nach relativ kurzer Zeit separate Phasen ausbilden.

In JP-A-07110617 wird versucht, durch eine spezielle Polyolstruktur die Mischbarkeit derartiger Komponenten zu verbessern. Dazu werden spezielle verträglichkeitsfördernde Polyole benötigt, die ansonsten im System nicht erforderlich sind.

In JP-A-04136017 wird durch Zusatz eines Monoepoxides zu einem mit dem Hauptpolyol nicht mischbaren OH-terminierten Polydien eine Verbesserung der Mischbarkeit erreicht.

In JP-A-6/3202610 wird ein Gemisch spezieller Zusammensetzung aus Polyesteralkoholen und Polyetheralkoholen genannt, wobei durch Kettenverlängerer eine verbesserte Kompatibilität der Polyetheralkohole/Polyesteralkohole erreicht werden soll.

In DE-A-3339235 werden kurzkettige Polyesteralkohole beschrieben, die mit Polyetheralkoholen mischbar sein sollen. Die genannten Ester auf Phthalsäureanhydridbasis sind nur begrenzt bei PUR einsetzbar.

EP-A-0136396 nennt monofunktionelle Polyetherole, die aus speziellen Epoxiden hergestellt werden. Diese sind dadurch besser mit anderen Polyolen mischbar. Nachteilig sind hier die in das System eingebrachten Zusatzstrukturen, die keine Verbesserung der Endprodukteigenschaften bewirken.

In DD 156872 werden teilveresterte Polyetherole als verträglichkeitsvermittelnde Komponenten genannt. Dieses Verfahren erfordert einen zusätzlichen technologischen Schritt und beeinflußt zudem die Endprodukteigenschaften negativ.

In US-A-4385133 dienen ethylenoxidreiche Polyole als Löslichkeitsvermittler. Diese Derivate sind oftmals in den PUR-Systemen nur begrenzt einsetzbar, da sie die Reaktivität und Zellöffnung stark beeinflussen.

In JP 61247739 wird ein spezielles polyethermodifiziertes Silikondiol genannt, das selbst mit Polyetherolen und Polyesterolen gut mischbar sein soll.

In US-A-4093569 wird ein Verfahren zur Herstellung von Harnstoffdispersionen durch Reaktion von Aminen und Isocyanaten in Anwesenheit von mindestens 4 Gew.-% Wasser beschrieben. Ziel dieser Erfindung ist die Erzielung hoher Feststoffgehalte bei niedrigen Polyolviskositäten. Die Autoren finden, daß unter diesen Bedingungen die festen Dispersionspartikelchen als verträglichkeitsvermittelndes Agens zwischen Polyetherolen und Polyesterolen fungieren.

In EP-A-0404441 wird eine Polyolkomponente, deren Phasenstabilität durch das Zumischen von löslichkeitsvermittelnden Anteilen an dispergiertem PUR und/oder PUR/Polyharnstoff erzielt wird, beansprucht. Damit soll eine Lagerstabilität von ca. 30 Tagen erreicht werden.

In EP-A-0116172 wird versucht, durch das Einbringen von in-situ erzeugten Urethanstrukturen eine Phasenhomogenität zu sichern. Dabei sind aber in der Regel deutliche Urethananteile erforderlich.

Die Aufgabe der Erfindung bestand darin, ein Verfahren zur Herstellung von homogenen, sich nicht entmischenden Polyolkomponenten, bestehend aus mindestens zwei nicht oder schwer mischbaren höhermolekularen Verbindungen mit mindestens zwei reaktiven Wasserstoffatomen und gegebenenfalls niedermolekularen Kettenverlängerungs- und/oder Vernetzungsmitteln sowie gegebenenfalls Treibmitteln, Katalysatoren und weiteren Hilfsmitteln und/oder Zusatzstoffen, zu entwickeln.

Erfindungsgemäß wurde die Aufgabe dadurch gelöst, daß dem Gemisch der genannten Einsatzstoffe in geringen Mengen mindestens ein primäres und/oder sekundäres Amin sowie mindestens ein organisches und/oder modifiziertes organisches Isocyanat zugesetzt werden.

Gegenstände der Erfindung sind demzufolge ein Verfahren zur Herstellung einer homogenen entmischungsstabilen Polyolkomponente, bestehend aus mindestens zwei höhermolekularen Verbindungen mit mindestens zwei reaktiven Wasserstoffatomen und gegebenenfalls niedermolekularen Kettenverlängerungs- und/oder Vernetzungsmitteln sowie gegebenenfalls Treibmitteln, Katalysatoren und weiteren Hilfsmitteln und/oder Zusatzstoffen, das dadurch gekennzeichnet ist, daß dieser Komponente mindestens ein primäres und/oder sekundäres Amin in Anteilen von 0,05 bis 7 Gew.-%, bezogen auf das Gewicht der Polyolkomponente, sowie mindestens ein organisches und/oder modifiziertes organisches Isocyanat in Anteilen von 0,05 bis 5 Gew.-%, bezogen auf das Gewicht der Polyolkomponente, zugegeben werden, sowie die entsprechende entmischungsstabile Polyolkomponente.

Gegenstand der Erfindung ist weiterhin die Verwendung dieser Polyolkomponente zur Herstellung von PUR, insbesondere kompakten und geschäumten PUR.

Überraschenderweise wurde gefunden, daß lagerstabile Gemische aus nicht oder nur schwer mischbaren Polyolen erhalten werden, wenn diese mit speziellen Aminderivaten, insbesondere primären Aminen, versetzt werden und diese Mischung mit einer geringen Isocyanatmenge zur Reaktion gebracht wird. Bereits das Zumischen geringer Anteile an primären und/oder sekundären Aminen und/oder Alkanolaminen zu dem durch Rühren homogenisierten Gemisch aus mehreren Polyolen sowie gegebenenfalls Kettenverlängerern und/oder Vernetzern und weiteren Hilfsmitteln und/oder Zusatzstoffen in Verbindung mit einer nachfolgenden Umsetzung des so erzeugten Gemisches mit geringen Anteilen an zugesetzten Isocyanaten bzw. NCO-gruppentragenden Verbindungen reicht aus, um eine langfristig lagerstabile homogene Komponente zu erhalten. Die sich dabei ausbildenden Spezies verhindern wirkungsvoll eine Phasenseparation. Dabei kommt es in der komponente zu einer leichten Viskositätserhöhung, die auch den Erfolg der Umsetzung anzeigt. Eine Temperaturerhöhung ist aufgrund der nur geringen Umsatzmengen nicht zu verzeichnen.

Erfindungsgemäß können nach diesem Verfahren nicht oder nur schwer mischbare höhermolekulare Verbindungen mit mindestens zwei reaktiven Wasserstoffatomen in einer Polyolkomponente eingesetzt werden. Als höhermolekulare Verbindungen mit mindestens zwei reaktiven Wasserstoffatomen werden vorzugsweise solche mit aciden H-Atomen, insbesondere Polyetherole und/oder Polyesterole, verwendet. Als besonders sinnvoll erweist sich die Anwendung dieses Verfahren bei Einsatz von Polyolen, die dazu neigen, sich nach kurzer Zeit wieder zu entmischen. Das betrifft insbesondere Gemische aus sehr ethylenoxidreichen und ethylenoxidarmen bzw. ethylenoxidfreien Polyolen, sowie Gemische aus Polyetheralkoholen und Polyesteralkoholen.

Beispielhaft genannt seien Gemische aus Weichschaumpolyetherolen (OHZ < 60 mg KOH/g) mit Adipinsäureestern (mittleres Molekulargewicht > 1000 g/mol) oder Gemische aus ethylenoxidreichen Zellöffnerpolyolen (Ethylenoxid-Gehalt > 60%) und Polypropylenglykolen, die sich in der Regel nach kurzer Standzeit entmischen.

Die eingesetzten Polyole weisen vorzugsweise ein mittleres Molekulargewicht zwischen 300 und 10 000 g/mol auf.

Mögliche Herstellungsweisen dieser Verbindungen sind weiter unten bei der Beschreibung der Komponente (b) beispielhaft aufgezeigt.

Die eingesetzten schwer oder nicht mischbaren Polyole werden vorteilhafterweise in einem Verhältnis von 1 zu 99 bis 99 zu 1 Gew.-%, vorzugsweise von 10 zu 90 bis 90 zu 10 Gew.-%, zueinander verwendet.

Der Anteil der Polyole, bezogen auf die Polyolkomponente, beträgt insgesamt 1 bis 95 Gew.-%.

Neben den genannten nicht oder nur schwer mischbaren höhermolekularen Verbindungen mit mindestens zwei reaktiven Wasserstoffatomen können in die Polyolkomponente auch weitere in der PUR-Chemie übliche höhermolekulare Verbindungen mit mindestens zwei reaktiven Wasserstoffatomen, die mit den beschriebenen Komponenten gut mischbar sind, eingearbeitet werden, wie sie beispielsweise weiter unten bei den Ausführungen zur Komponente (b) beschrieben sind.

Die homogene entmischungsstabile Polyolkomponente wird erfindungsgemäß erzeugt, indem den Bestandteilen der Polyolkomponente, bestehend aus mindestens zwei höhermolekularen Verbindungen mit mindestens zwei reaktiven Wasserstoffatomen sowie gegebenenfalls niedermolekularen Kettenverlängerungs- und/oder Vernetzungsmitteln, Treibmitteln, Katalysatoren und weiteren Hilfsmitteln und/oder Zusatzstoffen, geringe Anteile an speziellen Aminderivaten zugesetzt werden. Diese Mischung wird innig verrührt. Dazu gibt man eine geringe Menge eines Isocyanates und verrührt die ganze Mischung. In einer vorteilhaften Ausführungsform wird nach Zugabe der Isocyanate etwa 20 Minuten bei Raumtemperatur intensiv gerührt.

Es ist auch möglich, das eingesetzte Isocyanat vor der Herstellung der entmischungsstabilen Polyolkomponente mit einem Teil des Basispolyols zu verrühren und dann die anderen Bestandteile der polyolischen Komponente unter Rühren zuzusetzen.

Wird als Treibmittel Wasser verwendet, hat es sich als günstig erwiesen, dieses nicht bei der Herstellung der Dispersion, sondern erst später, kurz vor der Herstellung des PUR, der Polyolkomponente hinzuzufügen. Ebenso können weitere Systembestandteile der polyolischen Komponente auch nachträglich zugesetzt werden.

Erfindungsgemäß werden als Amine primäre und/oder sekundäre Amine, besonders bevorzugt primäre Amine, eingesetzt. Diese Amine sollten mehrfunktionell sein, können aber auch Anteile an monofunktionellen Aminen enthalten. Dabei kommen vorzugsweise aliphatische und/oder cycloaliphatische Amine zur Anwendung. Die Aminderivate können weitere funktionelle Gruppen wie -OH oder -SH aufweisen. Ebenso können Anteile von Alkanolaminen und Amingemische eingesetzt werden.

Beispielhaft seien aufgeführt: Hexamethylendiamin, Ethylendiamin, 2,2'-Dimethyl-4,4'-Methylenbiscyclohexylamin, NH₂-Gruppen tragende Polyole wie z.B. Jeffamintypen, 3,3'-Imidopropylamin, Fettamine, Diethylentriamin, Triethylentetramin, Propylendiamine, Butylendiamine, Diethanolamin und Ethanolamin.

Desweiteren ist erfindungsgemäß auch der Einsatz von in der Polyurethanchemie üblichen aromatischen Aminen möglich, wie beispielsweise Toluylendiaminen, insbesondere Diethyltoluylendiamin, oder Aminen der Diphenylmethanreihe.

Vorzugsweise werden 2,2'-Dimethyl-4,4'-methylenbiscyclohexylamin, Cocosfettamin und N-oleylpropylendiamin eingesetzt.

Die Amine kommen in Anteilen von 0,05 bis 7 Gew.-%, vorzugsweise von 0,5 bis 3,0 Gew.-%, bezogen auf das Gewicht der Polyolkomponente, zum Einsatz.

Der polyolischen Komponente, der das entsprechende primäre oder sekundäre Amin zugesetzt wurde, wird nun unter Rühren oder einer anderen geeigneten Technik des Vermischens mindestens ein organisches und/oder modifiziertes organisches Isocyanat zugemischt. Hierzu sind prinzipiell alle weiter unten als Komponente (a) aufgeführten Isocyanate verwendbar. Vorzugsweise werden jedoch aromatische Isocyanate eingesetzt. Insbesondere bevorzugt sind 2,4-und 2,6-Toluylendiisocyanate, 4,4'- und 2,4'-Diphenylmethandiisocyanate, Polyphenylpolymethylenpolyisocyanate und NCO-Gruppen enthaltende Prepolymere sowie Mischungen aus diesen Verbindungen. Die organischen und/oder modifizierten organischen Isocyanate werden dabei in Anteilen von 0,05 bis 5 Gew.-%, vorzugsweise von 0,5 bis 2,0 Gew.-%, bezogen auf das Gewicht der Polyolkomponente, eingesetzt.

Besonders entmischungsstabile Polyolkomponenten werden erreicht, wenn 0,5 bis 2,0 Gew.-% Amin und 0,5 bis 2,0 Gew.-% Isocyanat mit den übrigen Bestandteilen der Polyolkomponente verarbeitet werden.

Die nach Zugabe der organischen und/oder modifizierten organischen Isocyanate ablaufende Umsetzung macht sich in einem Viskositätsanstieg bemerkbar.

Bei der erfindungsgemäßen Herstellung der entmischungsstabilen Polyolkomponente ist diese auch bei längerer Lagerzeit homogen und absetzstabil. Das sonst notwendige Aufrühren der Polyolkomponente vor der Verarbeitung ist nicht erforderlich

Die erfindungsgemäß hergestellte homogene entmischungsstabile Polyolkomponente besteht aus mindestens zwei höhermolekularen Verbindungen mit mindestens zwei reaktiven Wasserstoffatomen und gegebenenfalls niedermolekularen Kettenverlängerungs- und/oder Vernetzungsmitteln sowie gegebenenfalls Treibmitteln, Katalysatoren und weiteren Hilfsmitteln und/oder Zusatzstoffen und ist herstellbar durch Zugabe mindestens eines Amins sowie mindestens eines organischen und/oder modifizierten organischen Isocyanates.

Sie wird vorzugsweise zur Herstellung von Polyurethanen eingesetzt.

Die Herstellung der Polyurethane erfolgt in an sich bekannter Weise durch Umsetzung von
a) organischen und/oder modifizierten organischen Isocyanaten mit
b) mindestens zwei höhermolekularen Verbindungen mit mindestens zwei reaktiven Wasserstoffatomen
   sowie gegebenenfalls
c) niedermolekularen Kettenverlängerungs- und/oder Vernetzungsmitteln,
d) Treibmitteln,
e) Katalysatoren und
f) weiteren Hilfsmitteln und/oder Zusatzstoffen.

Erfindungsgemäß wird dabei zunächst aus den Komponenten (b) und gegebenenfalls (c) bis (f) in Verbindung mit mindestens einem Amin sowie mindestens einem organischen und/oder modifizierten organischen Isocyanat wie oben beschrieben eine lagerstabile homogene Polyolkomponente hergestellt, die dann, vorzugsweise nach Lagerung und gegebenenfalls unter Zugabe weiterer Komponenten (b) bis (f) bzw. von Anteilen dieser Komponenten, mit der Komponente (a) umgesetzt wird. Zur Herstellung der homogenen entmischungsstabilen Polyolkomponente und der PUR auf deren Basis werden neben den oben beschriebenen speziellen und vorzugsweise verwendeten Verbindungen die an sich bekannten Aufbaukomponenten eingesetzt, zu denen im einzelnen folgendes auszuführen ist:
a) Als organische und/oder modifizierte organische Isocyanate zur Herstellung der erfindungsgemäßen PUR und zur Stabilisierung der Polyolkomponente kommen die an sich bekannten aliphatischen, cycloaliphatischen araliphatischen und vorzugsweise aromatischen mehrwertigen Isocyanate in Frage.
   Im einzelnen seien beispielhaft genannt: Alkylendiisocyanate mit 4 bis 12 Kohlenstoffatomen im Alkylenrest, wie 1,12-Dodecandiisocyanat, 2-Ethyl-tetramethylendiisocyanat-1,4, 2-Methylpentamethylendiisocyanat-1,5, Tetramethylendiisocyanat-1,4 und vorzugsweise Hexamethylendiisocyanat-1,6; cycloaliphatische Diisocyanate wie Cyclohexan-1,3-und-1,4-diisocyanat sowie beliebige Gemische dieser Isomeren, 1-Isocyanato-3,3,5-trimethyl-5-isocyanatomethylcyclohexan (IPDI), 2,4- und 2,6-Hexahydrotoluylendiisocyanat sowie die entsprechenden Isomerengemische, 4,4'-, 2,2'- und 2,4'-Dicyclohexlylmethandiisocyanat sowie die entsprechenden Isomerengemische, und vorzugsweise aromatische Di- und Polyisocyanate, wie z.B. 2,4- und 2,6-Toluylendiisocyanat und die entsprechenden Isomerengemische, 4,4'-, 2,4'- und 2,2'-Diphenylmethandiisocyanat und die entsprechenden Isomerengemische, Mischungen aus 4,4'- und 2,4'-Diphenylmethandiisocyanaten, Polyphenyl-polymethylenpolyisocyanate, Mischungen aus 4,4'-, 2,4'- und 2,2'-Diphenyl-methandiisocyanaten und Polyphenylpolymethylenpolyisocyanaten (Roh-MDI) und Mischungen aus Roh-MDI und Toluylendiisocyanaten. Die organischen Di- und Polyisocyanate können einzeln oder in Form ihrer Mischungen eingesetzt werden.
   Häufig werden auch sogenannte modifizierte mehrwertige Isocyanate, d.h. Produkte, die durch chemische Umsetzung organischer Di- und/oder Polyisocyanate erhalten werden, verwendet. Beispielhaft genannt seien Ester-, Harnstoff-, Biuret-, Allophanat-, Carbodiimid-, Isocyanurat-, Uretdionund/oder Urethangruppen enthaltende Di- und/oder Polyisocyanate. Im einzelnen kommen beispielsweise in Betracht: Urethangruppen enthaltende organische, vorzugsweise aromatische Polyisocyanate mit NCO-Gehalten von 33,6 bis 15 Gew.-%, vorzugsweise von 31 bis 21 Gew.-%, bezogen auf das Gesamtgewicht, beispielsweise mit niedermolekularen Diolen, Triolen, Dialkylenglykolen, Trialkylenglykolen oder Polyoxyalkylenglykolen mit Molekulargewichten bis 6000, insbesondere mit Molekulargewichten bis 1500, modifiziertes 4,4'-Diphenylmethandiisocyanat, modifizierte 4,4'- und 2,4'-Diphenylmethandiisocyanatmischungen, oder modifiziertes Roh-MDI oder 2,4- bzw. 2,6-Toluylendiisocyanat, wobei die Di- bzw. Polyoxyalkylenglykole einzeln oder als Gemische eingesetzt werden können. Beispielhaft genannt seien: Diethylen-, Dipropylenglykol, Polyoxyethylen-, Polyoxypropylen- und Polyoxypropylenpolyoxyethenglykole, -triole und/oder -tetrole.
   Geeignet sind auch NCO-Gruppen enthaltende Prepolymere mit NCO-Gehalten von 25 bis 3,5 Gew.-%, vorzugsweise von 21 bis 14 Gew.-%, bezogen auf das Gesamtgewicht, hergestellt aus den nachfolgend beschriebenen Polyester- und/oder vorzugsweise Polyetherpolyolen und 4,4'-Diphenylmethandiisocyanat, Mischungen aus 2,4'- und 4,4'-Diphenylmethandiisocyanat, 2,4-und/oder 2,6-Toluylendiisocyanaten oder Roh-MDI. Bewährt haben sich ferner flüssige, Carbo-diimidgruppen und/oder Isocyanuratringe enthaltende Polyisocyanate mit NCO-Gehalten von 33,6 bis 15, vorzugsweise 31 bis 21 Gew.-%, bezogen auf das Gesamtgewicht, z.B. auf Basis von 4,4'-, 2,4'- und/oder 2,2'-Diphenylmethandiisocyanat und/oder 2,4- und/oder 2,6-Toluylendiisocyanat. Die modifizierten Polyisocyanate können miteinander oder mit unmodifizierten organischen Polyisocyanaten wie z.B. 2,4'-, 4,4'-Diphenylmethandiisocyanat, Roh-MDI, 2,4- und/oder 2,6-Toluylendiisocyanat gegebenenfalls gemischt werden.
   Besonders bewährt haben sich als organische Polyisocyanate und kommen daher vorzugsweise zur Anwendung: Toluylendiisocyanat, MDI, Roh-MDI, Mischungen aus Toluylendiisocyanaten und Roh-MDI oder Mischungen aus modifizierten Urethangruppen enthaltenden organischen Polyisocyanaten mit einem NCO-Gehalt von 33,6 bis 15 Gew.-%, insbesondere solche auf Basis von Toluylendiisocyanaten, 4,4'-Diphenylmethandiisocyanat, Diphenylmethandiisocyanat-Isomerengemischen oder Roh-MDI und insbesondere Roh-MDI mit einem Diphenylmethandiisocyanat-Isomerengehalt von 30 bis 80 Gew.%, vorzugsweise von 30 bis 55 Gew.-%.
b) Als höhermolekulare Verbindungen mit mindestens zwei reaktiven Wasserstoffatomen werden erfindungsgemäß vorzugsweise die oben beschriebenen nicht oder nur schwer mischbaren Verbindungen eingesetzt. Daneben können weitere übliche höhermolekulare Verbindungen mit reaktiven Wasserstoffatomen eingesetzt werden, zweckmäßigerweise solche mit einer Funktionalität von 2 bis 4, vorzugsweise 2 bis 3, und einem Molekulargewicht von 300 bis 10000, vorzugsweise von 300 bis 6000.
   Bewährt haben sich z. B. Polyetherpolyamine und/oder vorzugsweise Polyole, ausgewählt aus der Gruppe der Polyetherpolyole, Polyesterpolyole, Polythioetherpolyole, Polyesteramide, hydroxylgruppenhaltigen Polyacetale und hydroxylgruppenhaltigen aliphatischen Polycarbonaten oder Mischungen aus mindestens zwei der genannten Polyole. Vorzugsweise Anwendung finden Polyesterpolyole und/oder Polyetherpolyole. Die Hydroxylzahl der Polyhydroxylverbindungen beträgt dabei in aller Regel 20 bis 80 und vorzugsweise 28 bis 56.
   Geeignete Polyesterpolyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen, mehrwertigen Alkoholen, vorzugsweise Diolen, mit 2 bis 12 Kohlenstoffatomen, vorzugsweise 2 bis 6 Kohlenstoffatomen hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydriden eingesetzt werden. Vorzugsweise verwendet werden Dicarbonsäuregemische aus Bernstein-, Glutar- und Adipinsäure in Mengenverhältnissen von beispielsweise 20 bis 35 : 35 bis 50 : 20 bis 32 Gew. -Tei-len und insbesondere Adipinsäure. Beispiele für zwei- und mehrwertige Alkohole, insbesondere Diole, sind: Ethandiol, Diethylenglykol, 1,2- bzw. 1,3-Propandiol, Dipro-pylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol und 1,6-Hexandiol. Eingesetzt werden können ferner Polyesterpolyole aus Lactonen, z.B.
   ε-Caprolacton oder Hydroxycarbonsäuren, z.B.
   ω-Hydroxycapronsäure.
   Zur Herstellung der Polyesterpolyole können die organischen, z.B. aromatischen und vorzugsweise aliphatischen, Polycarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgas, wie z.B. Stickstoff, Kohlenmonoxid, Helium, Argon u.a., in der Schmelze bei Temperaturen von 150 bis 250°C, vorzugsweise 180 bis 220°C, gegenbenfalls unter vermindertem Druck bis zu der gewünschten Säurezahl, die vorteilhafterweise kleiner als 10, vorzugsweise kleiner als 2, ist, polykondensiert werden. Nach einer bevorzugten Ausführungsform wird das Veresterungsgemisch bei den oben genannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol, zur azeotropen Abdestillation des Kondensationswassers durchgeführt werden.
   Zur Herstellung der Polyesterpolyole werden die organischen Polycarbonsäuren und/oder -derivate und mehrwertigen Alkohole vorteilhafterweise im Molverhältnis von 1:1 bis 1,8, vorzugsweise 1:1,05 bis 1,2, polykondensiert. Die erhaltenen Polyesterpolyole besitzen vorzugsweise eine Funktionalität von 2 bis 4, insbesondere 2 bis 3, und ein Molekulargewicht von 480 bis 3000, insbesondere 600 bis 2000.
   Insbesondere als Polyole verwendet werden jedoch Polyetherpolyole, die nach bekannten Verfahren, beispielsweise durch anionische Polymerisation mit Alkalihydroxiden, wie z.B. Natrium- oder Kaliumhydroxid, oder Alkalialkoholaten, wie z.B. Natriummethylat, Natrium- oder Kaliumethylat oder Kaliumisopropylat, als Katalysatoren und unter Zusatz mindestens eines Startermoleküls, das 2 bis 4, vorzugsweise 2 bis 3, reaktive Wasserstoffatome gebunden enthält, oder durch kationische Polymerisation mit Lewisssäuren, wie Antimonpentachlorid, Borfluorid-Etherat u.a., oder Bleicherde, als Katalysatoren aus einem oder mehreren Alkylenoxiden mit 2 bis 4 Kohlenstoffatomen im Alkylenrest hergestellt werden.
   Für spezielle Einsatzzwecke können auch monofunktionelle Starter in den Polyetheraufbau eingebunden werden. Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden.
   Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegenbenfalls N-mono- N,N- und N.N'-dialkylsubstituierte Diamine mit 1 bis 4 Kohlenstoffatomen im Alkylrest, wie gegebenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamin, 2,3-, 2,4- und 2,6-Toluylendiamin und 4,4'-, 2,4'- und 2,2'-Diaminodiphenylmethan. Als Startermoleküle kommen ferner in Betracht: Alkanolamine, wie z.B. Ethanolamin, N-Methylund N-Ethylethanolamin, Dialkanolamine, wie z.B. Diethanolamin, N-Methyl- und N-Ethyldiethanolamin, und Trialkanolamine, wie z.B. Triethanolamin und Ammoniak. Vorzugsweise verwendet werden mehrwertige, insbesondere zwei- und/oder dreiwertige Alkohole, wie Ethandiol, Propandiol-1,2 und -2,3, Diethylenglykol, Dipropylenglykol, Butandiol-1,4, Hexandiol-1,6, Glycerin, Trimethylolpropan und Pentaerythrit.
   Die Polyetherpolyole, vorzugsweise Polyoxypropylen- und Polyoxypropylenpoly-oxyethylenpolyole, besitzen eine Funktionalität von vorzugsweise 2 bis 4 und insbesondere 2 bis 3 und Molekulargewichte von 300 bis 8000, vorzugsweise 300 bis 6000 und insbesondere 1000 bis 5000, und geeignete Polyoxytetramethylenglykole ein Molekulargewicht bis ungefähr 3500.
   Als Polyetherpolyole eignen sich ferner polymermodifizierte Polyetherpolyole, vorzugsweise Pfropfpolyetherpolyole, insbesondere solche auf Styrol- und/oder Acrylnitrilbasis, die durch in situ Polymerisation von Acrylnitril, Styrol oder vorzugsweise Mischungen aus Styrol und Acrylnitril, z.B. im Gewichtsverhältnis 90:10 bis 10:90, vorzugsweise 70:30 bis 30:70, in zweckmäßigerweise den vorgenannten Polyetherpolyolen analog den Angaben der deutschen Patentschriften 1111394, 1222669 (US-A-3304273, 3383351, 3523093), 1152536 (GB 1040452) und 1152537 (GB 987618) hergestellt werden, sowie Polyetherpolyoldispersionen, die als disperse Phase, üblicherweise in einer Menge von 1 bis 50 Gew.-%, vorzugsweise 2 bis 25 Gew.-%, enthalten: z.B. Polyharnstoffe, Polyhydrazide, tert.-Aminogruppen gebunden enthaltende Polyurethane und/oder Melamin und die z.B. beschrieben werden in der EP-B-011752 (US-A-4304708), US-A-4374209 und DE-A-3231497.
   Die Polyetherpolyole können ebenso wie die Polyesterpolyole einzeln oder in Form von Mischungen verwendet werden. Ferner können sie mit den Pfropfpolyether-polyolen oder Polyesterpolyolen sowie den hydroxylgruppenhaltigen Polyesteramiden, Polyacetalen, Polycarbonaten und/oder Polyetherpolyaminen gemischt werden.
   Als hydroxylgruppenhaltige Polyacetale kommen z.B. die aus Glykolen, wie Diethylenglykol, Triethylenglykol, 4,4'-Dihydroxyethoxydiphenyldimethylmethan, He-xandiol und Formaldehyd herstellbaren Verbindungen in Frage. Auch durch Polyme-risation cyclischer Acetale lassen sich geeignete Polyacetale herstellen.
   Als Hydroxylgruppen aufweisende Polycarbonate kommen solche der an sich bekannten Art in Betracht, die beispielsweise durch Umsetzung von Diolen, wie Propandiol-1,3, Butandiol-1,4 und/oder Hexandiol-1,6, Diethylenglykol, Triethylenglykol oder Tetraethylenglykol mit Diarylcarbonaten, z.B. Diphenylcarbonat, oder Phosgen hergestellt werden können.
   Zu den Polyesteramiden zählen z.B. die aus mehrwertigen, gesättigten und/oder ungesättigten Carbonsäuren bzw. deren Anhydriden und mehrwertigen gesättigten und/oder ungesättigten Aminoalkoholen oder Mischungen aus mehrwertigen Alkoholen und Aminoalkoholen und/oder Polyaminen gewonnenen, vorwiegend linearen Kondensate.
   Geeignete Polyetherpolyamine können aus den obengenannten Polyetherpolyolen nach bekannten Verfahren hergestellt werden. Beispielhaft genannt seien die Cyanoalkylierung von Polyoxyalkylenpolyolen und anschließende Hydrierung des gebildeten Nitrils (US-A-3267050) oder die teilweise oder vollständige Aminierung von Polyoxyalkylenpolyolen mit Aminen oder Ammoniak in Gegenwart von Wasserstoff und Katalysatoren (DE-A-1215373).
   Neben den höhermolekularen Verbindungen mit mindestens zwei reaktiven Wasserstoffatomen können selbstverständlich auch solche mit nur einem reaktiven Wasserstoffatom, insbesondere Monoole, mit verwendet werden.
c) Zur Modifizierung der mechanischen Eigenschaften, z.B. der Härte, kann sich der Zusatz von Kettenverlängerungsmitteln, Vernetzungsmitteln oder gegebenenfalls auch Gemischen davon als vorteilhaft erweisen. Als Kettenverlängerungs- und/oder Vernetzungsmittel verwendet werden Diole und/oder Triole mit Molekulargewichten kleiner als 400, vorzugsweise 60 bis 300. In Betracht kommen beispielsweise aliphatische, cycloaliphatische und/oder araliphatische Diole mit 2 bis 14, vorzugsweise 4 bis 10 Kohlenstoffatomen, wie z.B. Ethylenglykol, Propandiol-1,3, Decandiol-1,10, o-, m-, p-Dihydroxycyclohexan, Diethylenglykol, Dipropylenglykol und vorzugsweise Butandiol-1,4, Hexandiol-1,6 und Bis-(2-hydroxyethyl)-hydrochinon, Triole, wie 1,2,4-, 1,3,5-Trihydroxycyclohexan, Glycerin und Trimethylolpropan und nidermolekulare hydroxylgruppenhaltige Polyalkylenoxide auf Basis Ethylen- und/oder 1,2-Propylenoxid und den vorgenannten Diolen und/oder Triolen als Startermoleküle.
   Sofern zur Herstellung der Polyurethane Kettenverlängerungsmittel, Vernetzungsmittel oder Mischungen davon Anwendung finden, kommen diese zweckmäßigerweise in einer Menge von 0 bis 25 Gew.-%, vorzugsweise von 1 bis 5 Gew.-%, bezogen auf das Gewicht der Komponente (b), zum Einsatz.
d) Als Treibmittel können die aus der Polyurethanchemie allgemein bekannten Fluorchlorkohlenwasserstoffe (FCKW) sowie hoch- und/oder perfluorierte Kohlen-wasserstoffe verwendet werden. Der Einsatz dieser Stoffe wird jedoch aus ökologischen Gründen stark eingeschränkt bzw. ganz eingestellt. Neben den HFCKW und HFKW bieten sich insbesondere aliphatische und/oder cycloaliphatische Kohlenwasserstoffe, insbesondere Pentan und Cyclopentan, oder Acetale, wie z. B. Methylal, als Alternativtreibmittel an.
   Diese physikalischen Treibmittel werden üblicherweise der Polyolkomponente des Systems zugesetzt. Sie können jedoch auch in der Isocyanatkomponete oder als Kombination sowohl der Polyolkomponente als auch der Isocyanatkomponente zugesetzt werden.
   Möglich ist auch ihre Verwendung, zusammen mit hoch- und/oder perfluorierten Kohlenwasserstoffen, in Form einer Emulsion der Polyolkomponente. Als Emulga-toren, sofern sie Anwendung finden, werden üblicherweise oligomere Acrylate eingesetzt, die als Seitengruppen Polyoxyalkylen- und Fluoralkanreste gebunden enthalten und einen Fluorgehalt von ungefährt 5 bis 30 Gew.-% aufweisen. Derartige Produkte sind aus der Kunststoffchemie hinreichend bekannt, z.B. EP-A-0351614.
   Die eingesetzte Menge des Treibmittels bzw. der Treibmittelmischung liegt dabei bei 1 bis 25 Gew.-%, vorzugsweise 1 bis 15 Gew.-%, jeweils bezogen auf die Komponente (b).
   Weiterhin ist es möglich und üblich, als Treibmittel der Aufbaukomponente (b) Wasser in einer Menge von 0,5 bis 15 Gew.-%, vorzugsweise 1 bis 5 Gew.-%, bezogen auf die Komponente (b), zuzusetzen. Der Wasserzusatz kann in Kombination mit dem Einsatz der anderen beschriebenen Treibmittel erfolgen.
e) Als katalysatoren werden insbesondere Verbindungen verwendet, die die Reaktion der reaktiven Wasserstoffatome, insbesondere Hydroxylgruppen, enthaltenden Verbindungen der Komponenten (b) und gegebenenfalls (c) mit den organischen, gegebenenfalls modifizierten organischen Isocyanaten (a) stark beschleunigen. In Betracht kommen organische Metallverbindungen, wie Eisen(II)-chlorid, Zinkchlorid, Bleioctoat und vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat, und Dialkylzinn-(IV)-salze von organischen Carbonsäuren, z.B. Dibutylzinndiacetat, Dibutylzinndilaurat, Dibutylzinnmaleat und Dioctylzinndiacetat. Die organischen Metallverbindungen werden allein oder vorzugsweise in Kombination mit stark basischen Aminen eingesetzt. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethylbutandiamin, N,N,N',N'-Tetramethylhexandiamin-1,6, Pentamethyldiethylentriamin, Tetramethyldiaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diazabicyclo-(2,2,2)-octan, und Alkanolverbindungen, wie Triethanolamin, Triisopropanolamin, N-Methyl- und N-Ethyldiethanolamin und Dimethylethanolamin. Als Katalysatoren kommen ferner in Betracht: Tris-(dialkylaminoalkyl)-s-hexahydrotriazine, insbesondere Tris-(N,N-dimethylaminopropyl)-s-hexahydrotriazin, Tetraalkylammoniumhydroxide, wie Tetramethylammoniumhydroxid, Alkalihydroxid, wie Natriumhydroxid, und Alkalialkoholate, wie Natriummethylat und Kaliumisopropylat, sowie Alkalisalze von langkettigen Fettsäuren mit 10 bis 20 C-Atomen und gegebenenfalls seitenständigen OH-Gruppen.
   Vorzugsweise verwendet werden 0,001 bis 5 Gew.-%, insbesondere 0,05 bis 3 Gew.-%, Katalysator bzw. Katalysatorkombination, bezogen auf das Gewicht der Aufbaukomponente (b).
f) Der Reaktionsmischung können gegebenfalls noch weitere Hilfsmittel und/oder Zusatzstoffe einverleibt werden. Genannt seien beispielsweise Flammschutzmittel, oberflächenaktive Substanzen, Schaumstabilisatoren, Zellregler, Füllstoffe, Farbstoffe, Pigmente, Hydrolyseschutzmittel, fungistatische und bakteriostatisch wirkende Substanzen.

Einzelheiten zu den einsetzbaren Hilfsmitteln und Zusatzstoffen, den übrigen Komponenten und den Verfahrens- und Reaktionsbedingungen der Polyurethanherstellung sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, dem weiter oben zitierten Kunststoff-Handbuch, Band VII, "Polyurethane", oder einschlägigen Patentschriften, wie beispielsweise den EP-A-0711798, DE-A-4408430 oder DE-A-19502969, zu entnehmen.

Vorzugsweise werden zur Herstellung der Polyurethane die Komponenten in solchen Mengen zur Umsetzung gebracht, daß das Äquivalenzverhältnis von NCO-Gruppen der Isocyanate (a) zur . Summe der reaktiven Wasserstoffatome der Komponenten (b) und gegebenfalls (c) 0,80 bis 1,25:1, vorzugsweise 0,90 bis 1,15:1 , beträgt.

Die Polyurethane werden vorteilhafterweise nach dem one-shot-Verfahren, beispielsweise mit Hilfe der Hochdruck- oder Niederdruck-Technik in offenen oder geschlossenen Formwerkzeugen, beispielsweise metallischen Formwerkzeugen hergestellt. Üblich ist auch die kontinuierliche Auftragung des Reaktionsgemisches auf geeigneten Bandstraßen zur Erzeugung von Schaumblöcken.

Als besonders vorteilhaft hat es sich erwiesen, nach dem Zweikomponentenverfahren zu arbeiten und als Komponente (A) die erfindungsgemäße entmischungsstabile Komponente, bestehend aus den Komponenten (b) und gegebenenfalls (c) bis (f), sowie als Komponente (B) die organischen und/oder modifizierten organischen Isocyanate (a), gegebenenfalls im Gemisch mit weiteren Hilfsmitteln und/oder Zusatzstoffen (f), zu verwenden.

Die Komponenten (A) und (B) werden vorzugsweise bei einer Temperatur von 15 bis 90°C, insbesondere von 20 bis 60°C und besonders bevorzugt von 20 bis 40°C, gemischt und in das offene oder gegebenenfalls unter erhöhtem Druck in das geschlossene Formwerkzeug eingebracht oder bei einer kontinuierlichen Arbeitsstation auf ein Band, das die Reaktionsmasse aufnimmt, aufgetragen. Die Vermischung kann, wie bereits dargelegt wurde, mechanisch mittels eines Rührers, mittels einer Rührschnecke oder durch eine Hochdruckvermischung in einer Düse durchgeführt werden. Die Formwerkzeugtemperatur beträgt zweckmäßigerweise 20 bis 110°C, vorzugsweise 30 bis 60°C und insbesondere 35 bis 55°C.

Mit der erfindungsgemäßen homogenen entmischungsstabilen Polyolkomponente können Polyurethane mit einem breiten Eigenschaftsspektrum, wie Weichschäume, Hartschäume, Coatings, Gießelastomere, RIM, Integralschäume, Duromerschäume und thermoplastische PUR, hergestellt werden. Vorzugsweise wird das erfindungsgemäße Verfahren bei der Herstellung von Hartoder Weichschäumen eingesetzt.

Die nach dem erfindungsgemäßen Verfahren hergestellten PUR bzw. PUR-Schaumstoffe weisen eine Dichte von10 bis 1500 kg/m³ auf.

Die vorliegende Erfindung soll anhand der nachstehenden Beispiele näher erläutert werden.

### Beispiel 1 - Vergleichsbeispiel

50 Gew.-Tl. Lupranol 2022 und 50 Gew.-Tl. Systol S 219 wurden bei Raumtemperatur 10 Minuten intensiv zu einem Polyetherol-Polyesterol-Gemisch verrührt. Bereits nach 24 Stunden trat eine deutliche Phasenseparation auf.

### Beispiel 1A

Der durch Rühren homogenisierten Komponente aus Beispiel 1 wurden 0,25 Gew.-Tl. 2,2'-Dimethyl-4.4'-methylenbiscyclohexylamin zugesetzt. Nachdem 15 Minuten gerührt wurde, erfolgte unter intensivem Rühren die Zugabe von 0,19 Gew.-Tl. Lupranat T 80. Nach erfolgter Zugabe des Isocyanates wurde noch 10 Minuten gerührt.

Das so behandelte Polyetherol-Polyesterol-Gemisch war mindestens 3 Monate lagerstabil. Das Reaktionsverhalten veränderte sich gegenüber der unbehandelten Komponente (Beispiel 1) nicht.

### Beispiel 2 - Vergleichsbeispiel

70 Gew.-Tl. Lupranol 2020 und 30 Gew.-Tl. Systol S 219 wurden durch Rühren vermischt. Bereits nach 24 Stunden trat eine deutliche Phasenseparation auf.

### Beispiel 2A

Der durch Rühren homogenisierten Komponente aus Beispiel 2 wurden 0,25 Gew.-Tl. 2,2'-Dimethyl-4.4'-methylenbiscyclohexylamin zugesetzt. Nachdem 10 Minuten gerührt wurde, erfolgte unter intensivem Rühren die Zugabe von 0,19 Gew.-Tl. Lupranat T 80. Nach erfolgter Zugabe des Isocyanates wurde noch 10 Minuten gerührt.

Das so behandelte Polyetherol-Polyesterol-Gemisch war mindestens 3 Monate lagerstabil. Das Reaktionsverhalten veränderte sich gegenüber der unbehandelten Komponente (Beispiel 2) nicht.

### Beispiel 3 - Vergleichsbeispiel

57 Gew.-Tl. Lupranol 2042 und 43 Gew.-Tl. Lupranol 2047 wurden 10 Minuten intensiv durch Rühren vermischt. Zu dieser so homogenisierten Komponente wurden 0,70 Gew.-Tl. Triethanolamin, 0,3 Gew.-Tl. Dabco 33LV, 0,1 Gew.-Tl. Niax A1, 0,6 Gew.-Tl. Silikon B 8680 und 3,1 Gew.-Tl. Wasser gegeben.

Nach 24 Stunden separierte die ursprünglich homogene Komponente in zwei Phasen.

### Beispiel 3A

Der durch Rühren homogenisierten Komponente aus Beispiel 3 wurden 0,5 Gew.-Tl. 2,2'-Dimethyl-4.4'-methylenbiscyclohexylamin und 0,05 Gew.-Tl. Lupragen VP 9199 zugesetzt. Nachdem 15 Minuten gerührt wurde, erfolgt unter intensivem Rühren die Zugabe von 0,38 Gew.-Tl. Lupranat T 80. Nach erfolgter Zugabe des Isocyanates wurde noch 10 Minuten gerührt. Zu dieser so homogenisierten Komponente wurden 0,60 Gew.-Tl. Triethanolamin, 0,2 Gew.-Tl. Dabco 33LV, 0,1 Gew.-Tl. Niax A1, 0,6 Gew.-Tl. Silikon B 8680 und 3,1 Gew.-Tl. Wasser gegeben.

Die so behandelte A-Komponente war mindestens 4 Monate lagerstabil. Das Reaktionsverhalten veränderte sich gegenüber der unbehandelten Komponente (Beispiel 3) nicht.

### Beispiel 4 - Vergleichsbeispiel

50 Gew.-Tl. Lupranol 1000 und 50 Gew.-Tl. Lupranol 2047 wurden 10 Minuten intensiv durch Rühren vermischt. Nach 24 Stunden separierte die ursprünglich homogene Komponente in zwei Phasen.

### Beispiel 4A

Der durch Rühren homogenisierten Komponente aus Beispiel 4 wurden 0,5 Gew.-Tl. 2,2'-Dimethyl-4.4'-methylenbiscyclohexylamin und 0,05 Gew. Tl. Lupragen VP 9199 zugesetzt. Nachdem 15 Minuten gerührt wurde, erfolgte unter intensivem Rühren die Zugabe von 0,38 Gew.-Tl. Lupranat T 80. Nach erfolgter Zugabe des Isocyanates wurde noch 10 Minuten gerührt.

Das so behandelte Polyetherol-Polyetherol-Gemisch war mindestens 3 Monate lagerstabil. Das Reaktionsverhalten veränderte sich gegenüber der unbehandelten Komponente (Beispiel 4) nicht.

Lupranol® 2022 - OHZ 48 mg KOH/g, Polyether auf Basis Ethylenoxid und Propylenoxid für Blockschaum (BASF);

Lupranol® 2042 - OHZ 27 mg KOH/g, Polyether auf Basis Ethylenoxid und Propylenoxid (BASF);

Systol S 219 - OHZ 61 mg KOH/g, Polyesteralkohol auf Basis Adipinsäure, Diethylenglykol und TMP (BASF);

Lupranol 2020 - OHZ 48 mg KOH/g Polyether auf Basis Propylenoxid und Ethylenoxid (BASF);

Lupranol 2047 - OHZ 42 mg KOH/g, Polyether auf Basis Ethylenoxid und Propylenoxid (BASF);

Lupranat T 80 - NCO 48%,Toluylendiisocyanat (80/20) (BASF);

Dabco 33LV - Aminkatalysator (Air Products);

Niax A1 - Aminkatalysator (OSi);

Silikon B 8680 - Silikonstabilisator (Goldschmidt)

## Patentansprüche

1. Verfahren zur Herstellung einer homogenen entmischungsstabilen Polyolkomponente, bestehend aus mindestens zwei höhermolekularen Verbindungen mit mindestens zwei reaktiven Wasserstoffatomen und gegebenenfalls niedermolekularen Kettenverlängerungs- und/oder Vernetzungsmitteln sowie gegebenenfalls Treibmitteln, Katalysatoren und weiteren Hilfsmitteln und/oder Zusatzstoffen, **dadurch gekennzeichnet, daß** dieser Komponente mindestens ein primäres und/oder sekundäres Amin in Anteilen von 0,05 bis 7 Gew.-%, bezogen auf das Gewicht der Polyolkomponente, sowie mindestens ein organisches und/oder modifiziertes organisches Isocyanat in Anteilen von 0,05 bis 5 Gew.-%, bezogen auf das Gewicht der Polyolkomponente, zugegeben werden.

2. Verfahren gemäß Anspruch 1, **dadurch gekennzeichnet, daß** als höhermolekulare Verbindungen mit mindestens zwei reaktiven Wasserstoffatomen Polyetherole und/oder Polyesterole mit aciden H-Atomen verwendet werden.

3. Verfahren gemäß Anspruch 1 oder 2, **dadurch gekennzeichnet, daß** das mittlere Molekulargewicht der eingesetzten Polyole zwischen 400 und 10 000 g/mol liegt.

4. Verfahren gemäß einem der Ansprüche 1 bis 3, **dadurch gekennzeichnet, daß** der Anteil der Polyole, bezogen auf die Polyolkomponente, insgesamt 1 bis 95 Gew.-% beträgt.

5. Verfahren gemäß einem der Ansprüche 1 bis 4, **dadurch gekennzeichnet, daß** die eingesetzten Polyole in einem Verhältnis von 1 zu 99 bis 99 zu 1 Gew.-% vorliegen.

6. Verfahren gemäß einem der Ansprüche 1 bis 5, **dadurch gekennzeichnet, daß** als Amine aliphatische und/oder cycloaliphatische Amine eingesetzt werden.

7. Verfahren gemäß einem der Ansprüche 1 bis 6, **dadurch gekennzeichnet, daß** die Amine in Anteilen von 0,05 bis 7 Gew.-%, bezogen auf das Gewicht der Polyolkomponente, eingesetzt werden.

8. Verfahren gemäß einem der Ansprüche 1 bis 7, **dadurch gekennzeichnet, daß** als organische und/oder modifizierte organische Isocyanate aromatische Isocyanate eingesetzt werden.

9. Verfahren gemäß einem der Ansprüche 1 bis 8, **dadurch gekennzeichnet, daß** als organische und/oder modifizierte organische Isocyanate NCO-Gruppen enthaltende Prepolymere oder NCO-haltige Umsetzungsprodukte eingesetzt werden.

10. Verfahren nach einem der Ansprüche 1 bis 9, **dadurch gekennzeichnet, daß** die organischen und/oder modifizierten organischen Isocyanate in Anteilen von 0,05 bis 5 Gew.-%, bezogen auf das Gewicht der Polyolkomponente, eingesetzt werden.

11. Homogene entmischungsstabile Polyolkomponente, bestehend aus mindestens zwei höhermolekularen Verbindungen mit mindestens zwei reaktiven Wasserstoffatomen und gegebenenfalls niedermolekularen Kettenverlängerungs- und/oder Vernetzungsmitteln sowie gegebenenfalls Treibmitteln, Katalysatoren und weiteren Hilfsmitteln und/oder Zusatzstoffen, herstellbar durch Zugabe mindestens eines primären und/oder sekundären Amins in Anteilen von 0,05 bis 7 Gew.-%, bezogen auf das Gewicht der Polyolkomponente, sowie mindestens eines organischen und/oder modifizierten organischen Isocyanates in Anteilen von 0,05 bis 5 Gew.-%, bezogen auf das Gewicht der Polyolkomponente.

12. Verwendung der homogenen entmischungsstabilen Polyolkomponente gemäß Anspruch 11 zur Herstellung von Polyurethanen.

## Claims

1. A process for preparing a homogeneous, demixing stable polyol component comprising at least two relatively high molecular weight compounds containing at least two reactive hydrogen atoms and, if desired, low molecular weight chain extenders and/or crosslinkers and also, if desired, blowing agents, catalysts and further auxiliaries and/or additives, wherein at least one primary and/or secondary amine in a proportion of from 0.05 to 7% by weight, based on the weight of the polyol component, and at least one organic and/or modified organic isocyanate in a proportion of from 0.05 to 5% weight, based on the weight of the polyol component are added to this component.

2. A process as claimed in claim 1, wherein the relatively high molecular weight compounds containing at least two reactive hydrogen atoms which are used are polyetherols and/or polyesterols containing acidic H atoms.

3. A process as claimed in claim 1 or 2, wherein the mean molecular weight of the polyols used is from 400 to 10,000 g/mol.

4. A process as claimed in any of claims 1 to 3, wherein the proportion of polyols, based on the polyol component, is a total of from 1 to 95% by weight.

5. A process as claimed in any of claims 1 to 4, wherein the polyols used are present in a weight ratio of from 1 : 99 to 99 : 1%.

6. A process as claimed in any of claims 1 to 5, wherein the amines used are aliphatic and/or cycloaliphatic amines.

7. A process as claimed in any of claims 1 to 6, wherein the amines are used in a proportion of from 0.05 to 7% by weight, based on the weight of the polyol component.

8. A process as claimed in any of claims 1 to 7, wherein the organic and/or modified organic isocyanates used are aromatic isocyanates.

9. A process as claimed in any of claims 1 to 8, wherein the organic and/or modified organic isocyanates used are prepolymers containing NCO groups or NCO-containing reaction products.

10. A process as claimed in any of claims 1 to 9, wherein the organic and/or modified organic isocyanates are used in a proportion of from 0.05 to 5% by weight, based on the weight of the polyol component.

11. A homogeneous, demixing-stable polyol component comprising at least two relatively high molecular weight compounds containing at least two reactive hydrogen atoms and, if desired, low molecular weight chain extenders and/or crosslinkers and also, if desired, blowing agents, catalysts and further auxiliaries and/or additives, able to be prepared by addition of at least one primary and/or secondary amine in a proportion of from 0.05 to 7% by weight, based on the weight of the polyol component, and at least one organic and/or modified organic isocyanate in a proportion of from 0.05 to 5% by weight, based on the weight of the polyol component.

12. Use of the homogeneous, demixing-stable polyol component as claimed in claim 11 for-producing polyurethanes.

## Revendications

1. Procédé de préparation d'un composant polyol homogène stable à la séparation, constitué d'au moins deux composés de masse moléculaire élevée ayant au moins deux atomes d'hydrogène réactifs et éventuellement d'agents extenseurs de chaîne et/ou d'agents de réticulation de faible masse moléculaire, ainsi qu'éventuellement d'agents moussants, de catalyseurs et d'autres adjuvants et/ou additifs, **caractérisé en ce que** l'on ajoute à ce composant, au moins une amine primaire et/ou secondaire en des proportions de 0,05 à 7% en poids, par rapport au poids du composant polyol, ainsi qu'au moins un isocyanate organique et/ou organique modifié en des proportions de 0,05 à 5% en poids, par rapport au poids du composant polyol.

2. Procédé selon la revendication 1, **caractérisé en ce que** des polyéthérols et/ou polyestérols ayant des atomes de H acides sont employés en tant que composés de masse moléculaire élevée ayant au moins deux atomes d'hydrogène réactifs.

3. Procédé selon la revendication 1 ou 2, **caractérisé en ce que** la masse moléculaire moyenne des polyols mis en oeuvre est comprise entre 400 et 10 000 g/mole.

4. Procédé selon l'une quelconque des revendications 1 à 3, **caractérisé en ce que** la proportion des polyols par rapport aux composants polyols est au total de 1 à 95% en poids.

5. Procédé selon l'une quelconque des revendications 1 à 4, **caractérisé en ce que** les polyols mis en oeuvre sont présents dans un rapport de 1:99 à 99:1 en % en poids.

6. Procédé selon l'une quelconque des revendications 1 à 5, **caractérisé en ce que** des amines aliphatiques et/ou cycloaliphatiques sont mises en oeuvre en tant qu'amines.

7. Procédé selon l'une quelconque des revendications 1 à 6, **caractérisé en ce que** les aminés sont mises en oeuvre en des proportions de 0,05 à 7% en poids, par rapport au poids du composant polyol.

8. Procédé selon l'une quelconque des revendications 1 à 7, **caractérisé en ce que** des isocyanates aromatiques sont mis en oeuvre en tant qu'isocyanates organiques et/ou organiques modifiés.

9. Procédé selon l'une quelconque des revendications 1 à 8, **caractérisé en ce que** des prépolymères contenant des groupes NCO ou des produits de réaction contenant des groupes NCO sont mis en oeuvre en tant qu'isocyanates organiques et/ou organiques modifiés.

10. Procédé selon l'une quelconque des revendications 1 à 9, **caractérisé en ce que** les isocyanates organiques et/ou organiques modifiés sont mis en oeuvre en des proportions de 0,05 à 5% en poids, par rapport au poids du composant polyol.

11. Composant polyol homogène stable à la séparation, constitué d'au moins deux composés de masse moléculaire élevée ayant au moins deux atomes d'hydrogène réactifs et éventuellement d'agents extenseurs de chaîne et/ou de réticulation, de faible masse moléculaire, ainsi qu'éventuellement d'agents moussants, de catalyseurs et d'autres adjuvants et/ou additifs, que l'on peut préparer en ajoutant au moins une amine primaire et/ou secondaire en des proportions de 0,05 à 7% en poids, par rapport au poids du composant polyol, ainsi qu'au moins un isocyanate organique et/ou organique modifié, en des proportions de 0,05 à 5% en poids, par rapport au poids du composant polyol.

12. Utilisation du composant polyol homogène, stable à la séparation, selon la revendication 11, pour préparer des polyuréthanes.
